# EUROPÄISCHE PATENTSCHRIFT

(11) **EP 1 004 601 B1**
(45) Veröffentlichungstag und Bekanntmachung des Hinweises auf die Patenterteilung: **11.02.2004**
(21) Anmeldenummer: 99123148.1
(22) Anmeldetag: 19.11.1999
(51) Int. Cl.: C08F 8/00, C08F 255/02, C08K 5/14

(54) **Verfahren zur peroxidischen Behandlung von Olefinpolymerisaten**
Process for peroxide treatment of olefin polymers
Procédé de traitement aux péroxydes de polymères oléfiniques

(30) Priorität: 25.11.1998 DE 19854285
(43) Veröffentlichungstag der Anmeldung: 31.05.2000
(73) Patentinhaber: Basell Poliolefine Italia S.p.A., 20124 Milano (IT)
(72) Erfinder: Huber, Karl, 67227 Frankenthal (DE); Schwind, Jürgen, 53332 Bornheim (DE); Lehr, Klaus, Dr., 55545 Volxheim (DE); Elser, Hermann, Dr., 67157 Wachenheim (DE); Klassen, Horst, Dr., 50374 Erfstadt (DE); Kagerbauer, Karl-Heinz, 50374 Erfstadt (DE)
(74) Vertreter: Colucci, Giuseppe

(56) Entgegenhaltungen:
- EP-A- 0 735 054
- WO-A-95/16717
- DE-A- 1 495 275
- DE-A- 1 808 790
- DE-A- 4 321 529
- DE-A- 4 435 534
- FR-A- 2 295 062
- US-A- 5 730 885

## Beschreibung

Die vorliegende Erfindung betrifft Verfahren zur peroxidischen Behandlung von Olefinpolymerisaten mit Di-tert.-butylperoxid in einem Extruder, bei denen man die Olefinpolymerisate gemeinsam mit Di-tert.-butylperoxid unter Inertgas einem Extruder zuführt. Außerdem betrifft die vorliegende Erfindung die Verwendung von peroxidisch behandelten Olefinpolymerisaten zur Herstellung von Formkörpern, Fasern, Folien oder Spinnvliesen sowie Verfahren zur Herstellung von Formkörpern, Fasern, Folien oder Spinnvliesen.

Olefinpolymerisate kommen überwiegend in der chemischen Form zur Anwendung, in der sie bei der Polymerisation anfallen. Für einige Einsatzbereiche ist es jedoch erforderlich oder vorteilhaft, die Olefinpolymerisate nach der eigentlichen Polymerisation noch chemisch zu modifizieren. Hierbei werden häufig Peroxide eingesetzt. Beispiele für Umsetzungen, bei denen Olefinpolymerisate mit Peroxiden behandelt werden, sind Pfropfungen oder Vernetzungen. Weiterhin werden Peroxide auch zum Molmassenabbau verwendet.

Um für die peroxidische Behandlung von Olefinpolymerisaten geeignet zu sein, müssen die Peroxide eine Reihe von Voraussetzungen erfüllen. Sie müssen beim Transport, bei der Lagerung und bei der Verarbeitung sicher handhabbar sein. Ihre Zersetzungstemperatur und ihr Zersetzungsverhalten muß so sein, daß sie erst an der gewünschten Stelle im Extruder zerfallen und dort die chemische Modifikation des Polymerisats bewirken. Sie und ihre Zerfallsprodukte dürfen nicht toxisch sein. Und bei der Verarbeitung darf nicht, bedingt durch eine hohe Flüchtigkeit, zu viel Peroxid verloren gehen.

Beispiele für Peroxide, die kommerziell bei der peroxidischen Behandlung von Olefinpolymerisaten verwendet werden, sind Dicumylperoxid, Bis-(tert.-butylperoxyisopropyl)benzol, 2,5-Dimethyl-2,5-di-tert.-butylperoxyhexan und Di-tert.-butylperoxid (Gächter/Müller, Plastics Additives, 4th Edition, Hanser Publishers, München 1993, Kap. 17 "Organic Peroxides as Cross-linking Agents", Seiten 833-862; C.Tzoganakis, J.Vlachopoulos und A.E.Hamielec, Chem. Eng. Prog. 1988, 84(11), "Controlled Degradation of Polypropylene", Seiten 47-49). Di-tert.-butylperoxid, das eine besonders einfache Struktur aufweist, ist vom wirtschaftlichen Aspekt her das vorteilhafteste dieser Peroxide. Allerdings weist es eine so hohe Flüchtigkeit auf, daß es nur bedingt in geringer Konzentration in Form eines Masterbatches auf einem festen Träger eingesetzt werden kann. Außerdem liegt die Zündtemperatur selbst in Stickstoff im Bereich zwischen 48 und 55°C, so daß der Einsatz als sicherheitstechnisch problematisch angesehen wird. Dementsprechend werden für einen großtechnischen Einsatz häufig die zwar teureren, aber einfacher zu handhabenden Vertreter verwendet.

Bei entsprechender verfahrenstechnischer Reaktionsführung ist zwar auch die Verwendung von Di-tert.-butylperoxid möglich, dies erfolgt aber bevorzugt im Labor- oder Technikumsmaßstab. Hierbei besteht eine Möglichkeit darin, Di-tert.-butylperoxid über Dosierpumpen flüssig dem Extruder zuzugeben. Die WO 95/16717 und die DE-A 42 20 774 beschreiben beispielsweise Verfahren, bei denen Di-tert.-butylperoxid in einen Bereich des Extruders dosiert wird, in dem das Polymerisat aufgeschmolzen vorliegt. Bei der Zugabe des Peroxids in flüssiger Form in den Extruder werden jedoch häufig Nachteile in den Polymereigenschaften und insbesonde're bei den Folieneigenschaften von abgebauten Propylenpolymerisaten beobachtet. Außerdem besteht die Gefahr von Explosionen im Inneren des Extruders. Gasförmiges Di-tert.-butylperoxid kann selbst in Inertgasatmosphäre leicht explodieren. Falls eine solche Gasexplosion auf flüssiges Peroxid übergreift, das an der Einspritzstelle oder - insbesondere bei nicht sofortigem Einmischen ins Polyolefin - auch noch in deren Nähe vorhanden sein kann, kann dies zu Beschädigungen des Extruders führen.

Es besteht auch die Möglichkeit, Di-tert.-butylperoxid als Mischung mit einem Polymerisat oder mit einem Teil des Polymerisats einzusetzen. Z.B. werden in den US-A 5 344 886 und US-A 5 344 888 Verfahren beschrieben, bei denen mit dem Ziel einer Pfropfung vom Maleinsäureanhydrid ein Propylenhomopolymerisat in Pulverform mit einer Lösung von Di-tert.-butylperoxid in Toluol, einer Maleinsäureanhydridlösung und einem Coagens in der Weise vermischt werden, daß die Lösung vom Polypropylenhomopolymerisat absorbiert wird. Diese Mischung wird dem Extruder zugeführt. Allerdings ist die Herstellung der Mischung ein separater, langwieriger Verfahrensschritt, für den extra Mischeinrichtungen vorhanden sein müssen. Dies ist wirtschaftlich unvorteilhaft und die Mengen, die bewältigt werden müssen, sind groß.

In der DT-A 25 51 206 wird ein Verfahren zum Mischen von flüssigem Di-tert.-butylperoxid mit einem polymeren Polyolefin beschrieben, wobei das flüssige Di-tert.-butylperoxid dem zerkleinerten Polyolefinmaterial in einer geschlossenen Kammer in einer wesentlichen Tiefe unter der Oberfläche der Polyolefinmasse zugeführt wird. Auch dies ist ein langwieriges Verfahren und die Zugabe des Di-tert.-butylperoxids erfolgt bei relativ niedrigen Temperaturen.

Prinzipiell kann das Peroxid auch direkt mit dem Olefinpolymerisat in den Einzugstrichter des Extruder gegeben werden. Hierbei wurde es aus sicherheitstechnischen Gründen allerdings als generell notwendig angesehen, bei Temperaturen deutlich unterhalb 55°C zu arbeiten und technische Vorkehrungen zu treffen, daß bei möglichen Explosionen im Trichter der entstehenden Druck kontrolliert abgebaut werden kann. Insbesondere bei älteren Polymerisationsverfahren stellen die niedrigen Temperaturen keinen größeren Nachteil dar, da bedingt durch die Verfahrensschritte zum Abtrennen bzw. Desaktivieren der Katalysatorbestandteile das Polymerisat mit solchen Temperaturen anfällt.

Bei modernen Verfahren mit Hochleistungskatalysatoren ist ein Entfernen der Katalysatorbestandteile jedoch nicht mehr erforderlich und das Polymerisat fällt üblicherweise mit Temperaturen im Bereich von 70 bis 90°C an. Es wird auch normalerweise mit diesen Temperaturen den Extrudern zugeführt, in denen es granuliert und mit Additiven versehen wird. Einrichtungen, die lediglich bei einer Zugabe von Di-tert.-butylperoxid in den Einzugstrichter zum vorherigen Abkühlen des Polymerisats dienen, würden ein solches Verfahren deutlich unwirtschaftlicher machen.

Der vorliegenden Erfindung lag deshalb die Aufgabe zugrunde, den oben genannten Nachteilen abzuhelfen und Verfahren zu entwickeln, bei denen auf wirtschaftliche Weise eine peroxidische Behandlung von Olefinpolymerisaten möglich ist, bei denen Produkte mit guten Eigenschaften und insbesondere guten Folieneigenschaften entstehen und die sicherheitstechnisch problemlos und einfach durchzuführen sind.

Überraschenderweise wurde nun gefunden, daß es bei einer bestimmten Beschaffenheit der Olefinpolymerisate sicherheitstechnisch unbedenklich ist, Di-tert.-butylperoxid zusammen mit Olefinpolymerisaten mit Temperaturen im Bereich von 55 bis 110°C direkt in den Einzugstrichter eines Extruders zu dosieren.

Demgemäß wurden Verfahren zur peroxidischen Behandlung von Olefinpolymerisaten mit Di-tert.-butylperoxid in einem Extruder gefunden, bei denen man die Olefinpolymerisate gemeinsam mit Ditert.-butylperoxid unter Inertgas einem Extruder zuführt, dadurch gekennzeichnet, daß man die Olefinpolymerisate in feinteiliger Form mit mittlerem Teilchendurchmerser im Bereich von 100 bis 5000 µm und mit Temperaturen im Bereich von 55°C bis 110°C einsetzt. Außerdem wurden die Verwendung von peroxidisch behandelten Olefinpolymerisaten zur Herstellung von Formkörpern, Fasern, Folien oder Spinnvliesen sowie Verfahren zur Herstellung von Formkörpern, Fasern, Folien oder Spinnvliesen gefunden.

Unter einer peroxidischen Behandlung im Sinne der vorliegenden Erfindung sollen alle Reaktionen verstanden werden, bei denen die Olefinpolymerisate mit Di.-tert.-butylperoxid oder mit Di.-tert.butylperoxid und weiteren Reaktionspartnern umgesetzt werden. Hierzu zugehören Pfropfungs- oder Vernetzungsreaktionen oder auch Abbaureaktionen.

Werden den Olefinpolymerisaten neben Di.-tert.-butylperoxid noch ethylenisch ungesättigte Monomere wie'z.B. Maleinsäureanhydrid, Acrylate oder Methacrylate zugegeben, die radikalisch polymerisiert werden können, erhält man Pfropfcopolymerisate, bei denen einzelne ethylenisch ungesättigte Monomere oder aus den ethylenisch ungesättigten Monomeren aufgebaute Polymerketten auf die Olefinpolymerisatketten gepfropft sind. Werden ethylenisch ungesättigte Monomere zugegeben, liegt deren Anteil üblicherweise im Bereich von 0,1 bis 30 Gew.-%, bezogen auf die gesamte Menge der Einsatzstoffe. Bevorzugt liegt der Anteil der ethylenisch ungesättigten Monomere im Bereich von 0,5 bis 20 Gew.-% und insbesondere im Bereich von 1 bis 15 Gew.-%.

Weiterhin kann im erfindungsgemäßen Verfahren das Di.-tert.butylperoxid zusammen mit den Olefinpolymerisaten zum Ziel einer vollständigen oder teilweisen Vernetzung der Olefinpolymerisate eingesetzt werden. Es ist auch möglich, zusätzlich Vernetzungshilfsmittel wie Triallylcyanurat oder Trimethylolpropantrimethacrylat einzusetzen. Beispielsweise werden Olefinpolymerisate und Di.-tert.-butylperoxid bei der Herstellung von Kabelummantelungen verwendet. Bei Zusatz von Di.-tert.-butylperoxid und z.B. Trimethylolpropantrimethacrylat zu Propylenpolymerisaten kann man zu langkettenverzweigtem Polypropylen gelangen.

Insbesondere bei Propylenpolymerisaten werden Peroxide häufig mit 'dem Ziel einer Reduzierung der mittleren Molmasse zugegeben. Dadurch wird in der Regel auch die Molmassenverteilung enger und es werden sowohl die Fließeigenschaften der Polymerschmelze, d.h. die Verarbeitungseigenschaften, als auch die Eigenschaften der Endprodukte beeinflußt. Es ergeben sich in der Regel Vorteile beim Spinnen, dies kann jedoch auch vorteilhaft beim Spritzgießen oder Extrusions-Blasformen sein. Peroxidisch abgebaute Propylenpolymerisaten werden oft als "Controlled-Rheologie"(CR)-Typen bezeichnet, wobei für den Abbauvorgang auch der Ausdruck "Vis-Breaking" verwendet wird.

Olefinpolymerisate im Sinne der vorliegenden Erfindung sind Homooder Copolymerisate von Olefinen und insbesondere von α-Olefinen, d.h. Kohlenwasserstoffen mit endständigen Doppelbindungen. Geeignete Monomere, aus denen Olefinpolymerisate aufgebaut sein können, sind beispielsweise funktionalisierte olefinisch ungesättigte Verbindungen wie Ester- oder Amidderivate der Acryl- oder Methacrylsäure, z.B. Acrylate, Methacrylate oder Acrylnitril. Bevorzugte Monomere sind unpolare olefinische Verbindungen, worunter auch arylsubstituierte α-Olefine wie Styrol fallen. Besonders bevorzugte α-Olefinen sind lineare oder verzweigte C₂-C₁₂-Alk-1-ene, insbesondere lineare C₂-C₁₀-Alk-1-ene wie Ethylen, Propylen, But-1-en, Pent-1-en, Hex-1-en, Hept-1-en, Oct-1-en, Non-1-en oder Dec-1-en oder 4-Methyl-pent-1-en.

Bevorzugte Olefinpolymerisate sind Homo- oder Copolymerisate des Ethylens, deren Ethylenanteil mindestens 50 Mol-% beträgt, oder Homo- oder Copolymerisate des Propylens, deren Propylenanteil mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten. Die Propylencopolymerisate können die anderen α-Olefine statistisch eingebaut enthalten. Es ist auch möglich, daß sie in Form sogenannter Block- oder Impactcopolymerisate vorliegen.

Die Herstellung der Olefinpolymerisate ist an sich bekannt oder kann nach an sich bekannten Methoden in den üblichen, für die Polymerisation von Olefinen verwendeten Reaktoren entweder diskontinuierlich oder vorzugsweise kontinuierlich erfolgen. Geeignete Reaktoren sind unter anderem kontinuierlich betriebene Rührkessel, gerührte Pulverbettreaktoren, Schleifen- oder Wirbelschichtreaktoren, wobei man gegebenenfalls auch eine Reihe von mehreren hintereinandergeschalteten, gleich- oder verschiedenartigen Reaktoren verwenden kann. Die Polymerisationsreaktionen lassen sich in der Gasphase, in Suspension, in flüssigen und in überkritischen Monomeren oder in inerten Lösungsmitteln durchführen.

Insbesondere kommen hierbei in der Polymerisationstechnik übliche Ziegler-Natta-Katalysatorsysteme zum Einsatz. Diese bestehen in der Regel aus einer titanhaltigen Feststoffkomponente, für deren Herstellung neben Titanverbindungen häufig auch anorganische oder polymere feinteilige Träger, Verbindungen des Magnesiums, Halogenverbindungen und Elektronendonorverbindungen eingesetzt werden, und mindestens einem Cokatalysator. Als Cokatalysatoren kommen Aluminiumverbindungen in Betracht. Vorzugsweise werden neben einer Aluminiumverbindung als weitere Cokatalysatoren noch eine oder mehrere Elektronendonorverbindungen eingesetzt.

Zur Herstellung der Propylenpolymerisate können auch Katalysatorsysteme auf Basis von Metallocenverbindungen verwendet werden. Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben.

Üblicherweise eingesetzte Metallocene enthalten als Zentralatome Titan, Hafnium oder bevorzugt Zirkonium, wobei im allgemeinen das Zentralatom über eine π-Bindung an mindestens eine, in der Regel substituierte Cyclopentadienylgruppe gebunden ist. Die Metallocenkomplexe liegen in den Katalysatorsystemen häufig geträgert vor. Weiterhin enthalten die Metallocen-Katalysatorsysteme als metalloceniumionenbildende Verbindungen üblicherweise Alumoxanverbindungen oder starke, neutrale Lewissäuren, ionische Verbindungen mit lewissauren Kationen oder ionische Verbindungen mit Brönsted-Säuren als Kation.

Die Polymerisationsbedingungen sind an sich unkritisch. Drücke von 1 bis 3500 bar, vorzugsweise von 2 bis 100 bar und insbesondere von 10 bis 40 bar sowie Temperaturen von 0 bis 400°C, vorzugsweise von 20 bis 250°C und insbesondere von 50 bis 100°C haben sich als geeignet erwiesen.

Die mittleren Molmassen der in den Reaktoren anfallenden Polymerisate können mit den in der Polymerisationstechnik üblichen Methoden gesteuert werden, beispielsweise durch Zufuhr von Reglern wie Wasserstoff.

Di-tert.-butylperoxid ist ein von mehreren Herstellern kommerziell vertriebenes Peroxid, das sich, bedingt durch seine relativ einfache Struktur, besonders wirtschaftlich herstellen läßt. Ditert.-butylperoxid liegt bei Raumtemperatur flüssig vor und wird in der Regel in Substanz oder verdünnt als Bestandteil einer flüssigen Mischung eingesetzt. Üblicherweise beträgt der Ditert.-butylperoxid-Anteil an der eingesetzten Flüssigkeit von 10 bis 100 Gew.-%. Bei den Mischungen kann es sich um homogene Mischungen mit inerten Flüssigkeiten wie Hexan, Heptan oder weißölen handeln. Di-tert.-butylperoxid kann aber auch als Emulsion, beispielsweise in Wasser, zum Einsatz kommen. Bevorzugt wird Ditert.-butylperoxid in Substanz eingesetzt.

Im erfindungsgemäßen Verfahren wird Di-tert.-butylperoxid bevorzugt in Zusammensetzungen, deren Gehalt an Di-tert.-butylperoxid im Bereich von 90 bis 100 Gew.-% liegt, eingesetzt, da es so möglichst ist, die Umsetzung mit relativ wenig Lösungsmittel durchzuführen, das anschließend wieder aus dem Produkt entfernt werden muß.

Di-tert.-butylperoxid besitzt einen Schmelzpunkt von ca. -30°C und eine relativ hohe Flüchtigkeit. Der Dampfdruck bei 20°C beträgt etwa 4,3 kPa. Dadurch stellt sich im Gasraum im Kontakt mit Ditert.-butylperoxid oder einer Di-tert.-butylperoxid-Mischung ein relativ hoher Partialdruck des Peroxids ein. Bei Gemischen mit Luft liegt der Flammpunkt bei 6°C, d.h. bei höheren Temperaturen führt eine Entzündung oder ein Funke zu einer Explosion.

Durch Ausschluß von Sauerstoff läßt sich die Explosionsgrenze heraufsetzen. Aber auch in Inertgas wie Stickstoff, Argon oder CO₂ kann es durch Selbstzersetzung von Di-tert.-butylperoxid zu einer Gasexplosion kommen. Funken von elektrischen Entladungen oder durch mechanische Reibung sind hierbei ausreichend. Die untere Explosionsgrenze liegt hierfür bei ca. 55°C. Weiterhin ist es auch möglich, daß eine eventuelle Gasexplosion auf eine in Kontakt stehende flüssige Phase übergreift. Dies bedeutet, daß im Regelfall ein sicheres Arbeiten mit Di-tert.-butylperoxid nur bei Temperaturen unterhalb von 55°C in einer Schutzgasatmosphäre bzw. in Kontakt mit Luft bei Temperaturen unterhalb von 6°C möglich ist.

Unter Extrudern in Sinne der vorliegenden Erfindung sollen alle ein- oder zweistufigen Maschinen verstanden werden, die feste oder flüssige Formmassen aufnehmen und aus einer Öffnung vorwiegend kontinuierlich auspressen. Die Formmassen können im Extruder oder Mixer plastifiziert, homogenisiert, gemischt, chemisch umgesetzt, begast oder entgast werden. Beispiele für Extruder sind Scheibenextruder, Stiftextruder und Planetwalzenextruder. Weitere Möglichkeiten sind Kombinationen von Mixern mit Austragsschnecken bzw. Zahnradpumpen. Bevorzugte Extruder sind Schneckenextruder, wobei diese als Einwellen- oder Zweiwellenmaschinen ausgeführt sein können. Besonders bevorzugt sind Zweischneckenextruder und kontinuierlich arbeitende Mixer mit Austragsorganen. Solche Maschinen sind in der Kunststoffindustrie üblich und werden beispielsweise von den Fa. Werner & Pfleiderer, Berstorff, Leistritz, JSW, Farrel, Kobe oder Toshiba hergestellt.

Bei der Kunststoffverarbeitungen werden die Extruder in der Regel bei Temperaturen im Bereich von 100 bis 400°C betrieben. Bei Olefinpolymerisaten liegen die Temperaturen bevorzugt im Bereich von 120 bis 350°C und besonders bevorzugt im Bereich von 200 bis 300°C. Die in den Extrudern herrschenden Drücke betragen von 0 bis 200 bar, bevorzugt von 0,5 bis 150 bar.

Üblicherweise werden Polymerisate nach der Polymerisation in einem Extruder aufgeschmolzen, homogenisiert und mit Additiven versehen. Hierzu werden in der Regel Schneckenextruder und bevorzugt Zweischneckenextruder eingesetzt. Das Polymerisat wird üblicherweise in einen Bereich der Schnecke gegeben, der relativ weit von der Austragsöffnung des Extruders entfernt ist. In der Aufschmelzzone des Extruders wird das Polymerisat plastifiziert bzw. geschmolzen und von der bzw. den Schnecken in einen zweiten Bereich gefördert, in dem eine homogene Phase des Polymerisats vorliegt.

Additive oder Stoffe, die mit dem Polymerisat umgesetzt werden sollen, können nun zusammen mit dem Polymerisat über den Einzugstrichter in den Extruder gegeben werden. Hierbei ist es möglich, daß zunächst einige oder alle an dieser Stelle zuzugebende Einsatzstoffe gemischt werden. Die Einsatzstoffe können also jeweils separat oder als Teil einer Mischung in den Einzugstrichter dosiert werden. Eine andere Möglichkeit besteht darin, die Additive oder Stoffe, die mit dem Polymerisat umgesetzt werden sollen, in einem Bereich zuzuführen werden, in dem das Polymerisat homogen vorliegt. Dies kann über geeignete Dosiereinrichtungen wie Pumpen, Dosierschnecken oder Seitenextruder erfolgen.

Im erfindungsgemäßen Verfahren werden die Olefinpolymerisate zusammen mit dem Peroxid dem Extruder zugeführt. Dadurch werden bessere Eigenschaften der resultierenden Produkte; und insbesondere bessere Folieneigenschaften wie ein geringerer Stippengehalt der Folien, erreicht. Außerdem ist es von der Dosiertechnik her einfacher, lediglich gegen Umgebungsdruck in den Einzugstrichter zu fördern, während die Dosiereinrichtungen, die in den Bereich der homogenen Phase fördern, auf die Drücke ausgelegt sein müssen, die im Extruder auftreten können. Aus sicherheitstechnischen Gründen ist es angebracht, die Zugabe des Polymerisats und des Peroxids unter Inertgasen wie Stickstoff, Argon oder CO₂ durchzuführen.

Vom wirtschaftlichen Gesichtspunkt ist es außerdem besonders interessant, und zwar insbesondere bei Polymerisaten, die in großen Mengen hergestellt und aufgearbeitet werden, wenn sich der Extrusionsschritt direkt an die Polymerisation anschließt und weder eine Zwischenlagerung noch ein weiterer Transport notwendig ist. Mit dem erfindungsgemäßen Verfahren ist es möglich, selbst bei modernen Polymerisationsverfahren mit Hochleistungskatalysatoren diese ohne weitere aufwendige Abkühlschritte zusammen mit Di-tert.-butylperoxid in den Einzugstrichter des Extruders zu geben.

Erfindungsgemäß werden Olefinpolymerisate mit Temperaturen im Bereich von 50 bis 110°C eingesetzt. Bevorzugt weisen die Polymerisate Temperaturen von 60 bis 100°C und insbesondere von 70 bis 90°C auf. Diese gegenüber Umgebungstemperatur erhöhten Temperaturen sind in der Regel durch eine noch nicht vollständige Abgabe der Polymerisationswärme bedingt.

Die erfindungsgemäß einzusetzenden Olefinpolymerisate liegen in feinteiliger Form vor. Die Polymerpartikel weisen hierbei mittlere Teilchendurchmesser im Bereich von 100 bis 5000 µm, bevorzugt von 200 bis 4000 µm und insbesondere von 500 bis 2000 µm auf.

Die feinteilige Form der Olefinpolymerisate kann durch Mahlen grobteiliger Partikel erhalten.werden. Bevorzugt werden jedoch Polymerpartikel eingesetzt, die im Polymerisationsprozeß in der feinteiligen Form anfallen.

Bevorzugt weisen die erfindungsgemäß einzusetzenden Olefinpolymerisate eine Oberfläche im Bereich von 0,2 bis 25 m²/g auf. Besonders bevorzugt liegt die Oberfläche im Bereich von 3 bis 15 m²/g und insbesondere von 5 bis 10 m²/g.

Das Di-tert.-butylperoxid kann mit dem Olefinpolymerisat oder einem Teil des Olefinpolymerisats vorgemischt werden und als Mischung dem Einzugstrichter zugeführt werden. Bevorzugt ist eine, Ausführungsform, bei der das Di-tert.-butylperoxid separat von Polymerisat zugegeben wird. Bevorzugt wird hierbei das Di-tert.butylperoxid kontinuierlich in flüssiger Form in Substanz oder verdünnt über ein Einleitungsrohr in den Trichter gegeben. Besonders bevorzugt sind Ausführungsformen, bei denen das Eintragsrohr so angeordnet ist, daß dessen Ende ständig von fallendem, feinteiligem Polymerisat umgeben ist. Ebenfalls besonders bevorzugt ist es, wenn das Eintragsrohr in die sich im Einzugstrichter befindende Schüttung der Olefinpolymerisate eintaucht.

Es werden üblicherweise solche Mengen an Di-tert.-butylperoxid dem dem Extruder zugeführt, daß das Gewichtsverhältnis von Ditert.-butylperoxid zu Olefinpolymerisat in einem Bereich von 1:100000 bis 1:500 liegt. Bevorzugt beträgt das Gewichtsverhältnis von Di-tert.-butylperoxid zu Olefinpolymerisat von 1:50000 bis 1:1000 und insbesondere von 1:40000 bis 1:1500.

Wenn bei dem erfindungsgemäßen Verfahren einem Propylenpolymerisat Di.-tert.-butylperoxid mit dem Ziel zugegeben wird, dieses peroxidisch abzubauen, wird die Schmelze-Fließrate (MFR), gemessen nach ISO 1133 bei 230°C unter einem Gewicht von 2,16 kg, verglichen mit einem Propylenpolymerisat, das unter identischen Bedingungen jedoch ohne Zugabe von Di.-tert.-butylperoxid extrudiert wurde, in der Regel um mindestens 5 % erhöht. Bevorzugt ist eine Erhöhung um einen Faktor von 1,2 bis 30 und insbesondere um einen Faktor von 2 bis 10.

Den Olefinpolymerisaten können vor, während oder nach der peroxidischen Behandlung Additive in üblichen Mengen zugesetzt werden. Hierbei kann es sich um Stabilisatoren, Gleit- oder Entformungsmittel, Füllstoffe, Nukleierungsmittel, Antistatika, Weichmacher, Farbstoffe, Pigmente oder Flammschutzmittel handeln. Bevorzugt erfolgen peroxidische Behandlung und Zugabe der Additive bei einer Extrusion.

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthalten die Polymerisate einen oder mehrere der Stabilisatoren in Mengen bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die Polymerisate kommen z.B. Talkum, Kreide oder Glasfasern in Betracht, wobei hier Mengen bis 50 Gew.-% verwendet werden.

Geeignete Nukleierungsmittel sind beispielsweise anorganische Zusatzstoffe wie Talkum, Kieselsäure oder Kaolin, Salze von Monooder Polycarbonsäuren wie Natriumbenzoat oder Aluminium-tert.butylbenzoat, Dibenzylidensorbitol oder dessen C₁-C₈-alkylsubstituierte Derivate wie Methyl- oder Dimethyldibenzylidensorbitol oder Salze von Diestern der Phosphorsäure wie Natrium-2,2'-methylenbis(4,6,-di-tert.-butylphenyl)phosphat. Der Gehalt der Propylenpolymerisate an Nukleierungsmitteln beträgt in der Regel bis 5 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Mit Hilfe des erfindungsgemäßen Verfahrens gelingt es, auf wirtschaftliche Weise eine peroxidische Behandlung von Olefinpolymerisaten durchzuführen. Die so hergestellten Polymerisate besitzen gute Eigenschaften und insbesondere gute Folieneigenschaften wie einen geringe Stippengehalt. Sie eignen sich zur Herstellung von Formkörpern, Folien, Fasern oder Spinnvliesen.

Besonders geeignet ist das Verfahren, wenn die peroxidisch behandelten Olefinpolymerisate anschließend zu Folien, Fasern oder Spinnvliesen verarbeitet werden.

### Beispiele

Zur Verdeutlichung des Einflusses der Polymerisatmorphologie auf die sicherheitstechnischen Eigenschaften von Di-tert.-butylperoxid bzw. Mischungen von Di-tert.-butylperoxid mit Olefinpolymerisaten wurde eine Reihe von Modellversuchen durchgeführt.

Hierbei kam jeweils ein Glasrohr zum Einsatz, in dem sich im Gasraum jeweils zwei Elektroden (Zündquelle) befanden, zwischen denen im Abstand von 60 Sekunden eine Entladung erfolgte.

### Vergleichsbeispiel A

In dem Glasrohr wurden unter Stickstoff 50 ml Di-tert.-butylperoxid vorgelegt.

Das Glasrohr wurde langsam in vorgegebenen Temperaturschritten erwärmt, wobei darauf geachtet wurde, daß die Differenz zwischen der Wandtemperatur und der Temperatur der Probe jeweils geringer als 1°C war. Bei einer Wandtemperatur von 48,0°C wurde eine Explosion in der Gasphase ausgelöst.

Der Versuch wurde zweimal wiederholt. Es fanden jeweils Explosionen bei Wandtemperaturen von 47,9 und 48,5°C statt.

### Beispiel 1

In dem Glasrohr wurden unter Stickstoff 170 g eines feinteiligen Homopolypropylenpulvers vorgelegt. Das mittels Gasphasenpolymerisation erhaltene Polypropylenpulver wies einen mittleren Teilchendurchmesser von 1000 µm und eine Oberfläche von 2,7 m²/g auf. Anschließend wurde unter Stickstoff soviel Di-tert.-butylperoxid zugegeben, daß das Gewichtsverhältnis von Di-tert.-butylperoxid zu Polypropylenpulver 1:1000 betrug.

Das Glasrohr wurde langsam in vorgegebenen Temperaturschritten erwärmt, wobei darauf geachtet wurde, daß die Differenz zwischen der Wandtemperatur und der Temperatur der Probe jeweils geringer als 1°C war. Dies wurde fortgesetzt, bis eine Wandtemperatur von 120°C erreicht war. Es wurde keine Explosion beobachtet.

### Beispiel 2

Beispiel 1 wurde wiederholt, allerdings lag das Gewichtsverhältnis von Di-tert.-butylperoxid zu Polypropylenpulver bei 1:500 und es wurden 200 g des Pulvers vorgelegt.

Das Glasrohr wurde analog Beispiel 1 langsam erwärmt bis eine Wandtemperatur von 120°C erreicht war. Es wurde keine Explosion beobachtet.

### Vergleichsbeispiel B

Beispiel 1 wurde wiederholt, allerdings wurde anstelle des Polypropylenpulvers ein Granulat des in den Beispielen 1 und 2 eingesetzten Propylenpolymerisats verwendet. Das Granulat wies einen mittleren Teilchendurchmesser von 2 mm und eine Oberfläche von 0, 0015 m²/g auf.

Das Glasrohr wurde analog Beispiel 1 langsam erwärmt. Bei einer Wandtemperatur von 71°C erfolgte eine Explosion.

Anhand der Beispiele 1 und 2 sowie der Vergleichsbeispiele A und B wird deutlich, daß Mischungen aus einem feinteiligen Olefinpolymerisat und Di-tert.-butylperoxid eine deutlich geringer Explosionsneigung, d.h. eine höhere Temperatur, bei der eine Explosion ausgelöst wird, haben als Di-tert.-butylperoxid alleine oder als Mischungen aus grobteiligem Olefinpolymerisat und Ditert.-butylperoxid.

Andersgeartete Vergleichsversuche, die die sicherheitstechnischen Nachteile von nicht erfindungsgemäßen Verfahren demonstrieren, führen zwangsläufig ebenfalls zu Explosionen. Wegen des zu erwartenden beträchtlichen Schadens wurde darauf verzichtet, solche Versuche mit einem Extruder durchzuführen. Es wurde sich in dieser Hinsicht auf die Vergleichsbeispiele A und B im Modellmaßstab beschränkt.

Die folgenden Beispiele zeigen, daß es mit dem erfindungsgemäßen Verfahren möglich ist, direkt im Anschluß an die Polymerisation auf wirtschaftlich vorteilhafte Weise eine peroxidische Behandlung von Olefinpolymerisaten durchzuführen.

### Beispiel 3

In einem gerührten Pulverbettreaktor mit einem Rauminhalt von 25 m³ wurde kontinuierlich mit einem Ausstoß von 8 t/h ein Propylenhomopolymerisat mit einem MFR (gemessen nach ISO 1133 bei 230°C unter einem Gewicht von 2,16 kg) von 5,5 g/10 min polymerisiert. Das erhaltene pulverförmige Polymerisat wies einen mittleren Teilchendurchmesser von 1000 µm, eine Oberfläche von 5 m²/g und eine Schüttdichte von 0,4 kg/l auf.

Das aus der Polymerisationsanlage austretende Propylenpolymerisat wurde in einem Siloschneckenmischer mit den Additiven Calciumstearat und Pentaerythryl-tetrakis-3-(2,5-di-tert.-butyl-4-hydroxyphenyl)propionat gemischt. Es wurde soviel der beiden Additive zugegeben, daß deren Gehalt im Endprodukt jeweils 0,1 Gew.-% betrug.

Das Propylenhomopolymerisat, das eine noch von der Polymerisation herrührende Massetemperatur von 80°C aufwies, wurde mit den zugegebenen Additiven kontinuierlich in den Einzugstrichter eines Zweischneckenextruders ZSK 170 der Fa. Werner & Pfleiderer gefördert. Der Einzugstrichter enthielt hierbei eine Stickstoffatmosphäre. Di-tert.-butylperoxid wurde ebenfalls kontinuierlich mit 0,3 kg pro Tonne Propylenpolymerisat so in den Einzugstrichter dosiert, daß das Ende des Eintragsrohrs immer von frei fallendem Propylenpolymerisatpulver umgeben war.

Das peroxidisch behandelte Propylenhomopolymerisat wurde beim Verlassen des Extruders granuliert und wies einen MFR von 22 g/10 min auf. Es wurde auf diese Weise für ca. 24 Stunden Propylenhomopolymerisat peroxidisch abgebaut, ohne daß es zu einer Entzündung im Einzugstrichter gekommen ist.

Aus dem erhaltenen Granulat wurde mittels eines Einschnecken-Extruders bei einer Schmelzetemperatur von 190°C mit einem Durchsatz von 2,5 kg/h eine 40 µm dicke Breitschlitzfolie hergestellt. Bei der Folienherstellung wurde optisch online mittels einer Brabender-CCD-Kamera die Zahl der Stippen bestimmt. Hieraus ergab sich die Stippennote 2,0. (Die Stippennote erhält man über eine Kalibrierkurve aus der Anzahl der Stippen pro m² sowie aus deren Größe. Eine Stippennote von 1 bedeutet hierbei, daß praktisch keine Stippen vorliegen, während eine Stippennote von 5 bedeutet, daß das Polymerisat als Folienmaterial unbrauchbar ist.)

### Vergleichsbeispiel C

Beispiel 3 wurde wiederholt, jedoch wurde kein Di-tert.-butylperoxid in den Einzugstrichter gegeben, sondern es wurde Peroxid über eine Pumpe in den Bereich des Extruders dosiert, in dem das Polymerisat aufgeschmolzen vorliegt. Um eventuelle Explosionen im Extruder zu vermeiden, wurde als Peroxid 2,5-Di-tert.-butylperoxy-2,5-dimethylhexan verwendet.

Aus dem peroxidisch abgebauten Propylenpolymerisat wurde ebenfalls eine Breitschlitzfolie hergestellt. Die Stippennote betrug 3,5.

### Vergleichsbeispiel D

Beispiel 3 wurde wiederholt, d.h. das Peroxid wurde in den Einzugsextruder gegeben, jedoch wurde 2,5-Di-tert.-butylperoxy-2,5-dimethylhexan verwendet.

Aus dem peroxidisch abgebauten Propylenpolymerisat wurde ebenfalls eine Breitschlitzfolie hergestellt. Die Stippennote betrug 2,25.

### Beispiel 4

In einem gerührten Pulverbettreaktor mit einem Rauminhalt von 25 m³ wurde kontinuierlich mit einem Ausstoß von 6,5 t/h ein Propylenhomopolymerisat mit einem MFR (gemessen nach ISO 1133 bei 230°C unter einem Gewicht von 2,16 kg) von 2,2 g/10 min polymerisiert. Das erhaltene pulverförmige Polymerisat wies einen mittleren Teilchendurchmesser von 1200 µm, eine Oberfläche von 2,7 m²/g und eine Schüttdichte von 0,4 kg/l auf.

Das aus der Polymerisationsanlage austretende Propylenpolymerisat wurde mit einem Zweistrommischer mit den Additiven Calciumstearat und Pentaerythryl-tetrakis-3-(2,5-di-tert.-butyl-4-hydroxyphenyl)propionat gemischt. Es wurde soviel der beiden Additive zugegeben, daß deren Gehalt im Endprodukt jeweils 0,1 Gew.-% betrug.

Das Propylenhomopolymerisat, das eine noch von der Polymerisation herrührende Massetemperatur von 70°C aufwies, wurde mit den zugegebenen Additiven kontinuierlich in den Einzugstrichter eines kontinuierlichen Mixers der Fa. Farrel (Typ UM 9) gefördert. Der Einzugstrichter enthielt hierbei eine Stickstoffatmosphäre.

Di-tert.-butylperoxid wurde als 50 gew.-%ige Mischung mit Weißöl ebenfalls kontinuierlich mit 1,6 kg Mischung pro Tonne Propylenpolymerisat in den Einzugstrichter dosiert. Die Öffnung des Eintragsrohr war direkt über den Rotoren angeordnet.

Das peroxidisch behandelte Propylenhomopolymerisat wurde beim Verlassen des Extruders granuliert und wies einen MFR von 18 g/10 min auf. Es wurde auf diese Weise für 8 Stunden Propylenhomopolymerisat peroxidisch abgebaut, ohne daß es zu einer Entzündung im Einzugstrichter gekommen ist.

### Beispiel 5

In einem gerührten Pulverbettreaktor mit einem Rauminhalt von 12,5m³ wurde kontinuierlich mit einem Ausstoß von 2,8 t/h ein Propylenhomopolymerisat mit einem MFR (gemessen nach ISO 1133 bei 230°C unter einem Gewicht von 2,16 kg) von 8 g/10 min polymerisiert. Das erhaltene pulverförmige Polymerisat wies einen mittleren Teilchendurchmesser von 800 µm, eine Oberfläche von 7,2 m²/g und eine Schüttdichte von 0,37 kg/l auf.

Das aus der Polymerisationsanlage austretende Propylenpolymerisat wurde in einem Kegelschneckenmischer mit den Additiven Calciumstearat, Pentaerythryl-tetrakis-3-(2,5-di-tert.-butyl-4-hydroxyphenyl)propionat und Talkum gemischt. Es wurde jeweils soviel der beiden Additive Calciumstearat und Pentaerythryl-tetrakis-3-(2,5-di-tert.-butyl-4-hydroxyphenyl)propionat zugegeben, daß deren Gehalt im Endprodukt 0,1 Gew.-% betrug. Der Gehalt des Talkums im Endprodukt wurde auf 10 Gew.-% eingestellt.

Das Propylenhomopolymerisat, das eine noch von der Polymerisation herrührende Massetemperatur von 75°C aufwies, wurde mit den zugegebenen Additiven kontinuierlich in den Einzugstrichter eines Zweischneckenextruders ZSK 160 der Fa. Werner & Pfleiderer gefördert. Der Einzugstrichter enthielt hierbei eine Stickstoffatmosphäre. Di-tert.-butylperoxid wurde ebenfalls kontinuierlich mit 0,42 kg pro Tonne Propylenpolymerisat so in den Einzugstrichter dosiert, daß dessen Eintragsrohr immer in die sich im Einzugstrichter befindende Schüttung von Propylenpolymerisatpulver eintauchte.

Das peroxidisch behandelte Propylenhomopolymerisat wurde beim Verlassen des Extruders granuliert und wies einen MFR von 54 g/10 min auf. Es wurde auf diese Weise für 3 Tage Propylenhomopolymerisat peroxidisch abgebaut, ohne daß es zu einer Entzündung im Einzugstrichter gekommen ist.

### Beispiel 6

In einem Loop-Reaktor mit einem Rauminhalt von 80m³ wurde kontinuierlich mit einem Ausstoß von 20 t/h ein Propylenhomopolymerisat mit einem MFR (gemessen nach ISO 1133 bei 230°C unter einem Gewicht von 2,16 kg) von 1,2 g/10 min polymerisiert. Das erhaltene pulverförmige Polymerisat wies einen mittleren Teilchendurchmesser von 1100 µm, eine Oberfläche von 5,3 m²/g und eine Schüttdichte von 0,5 kg/l auf.

Das aus der Polymerisationsanlage austretende Propylenpolymerisat wurde in einem Kegelschneckenmischer mit jeweils gleichen Anteilen der drei Additive Calciumstearat, Pentaerythryl-tetrakis-3-(2,5-di-tert.-butyl-4-hydroxyphenyl)propionat und Talkum gemischt. Es wurde soviel der Additive zugegeben, daß deren Gehalt im Endprodukt in der Summe 0,3 Gew.-% betrug.

Das Propylenhomopolymerisat, das eine noch von der Polymerisation herrührende Massetemperatur von 70°C aufwies, wurde mit den zugegebenen Additiven kontinuierlich in den Einzugstrichter eines Zweischneckenextruders ZSK 300 der Fa. Werner & Pfleiderer gefördert. Der Einzugstrichter enthielt hierbei eine Stickstoffatmosphäre. Di-tert.-butylperoxid wurde ebenfalls kontinuierlich mit 0,57 kg pro Tonne Propylenpolymerisat so in den Einzugstrichter dosiert, daß dessen Eintragsrohr immer in die sich im Einzugstrichter befindende Schüttung von Propylenpolymerisatpulver eintauchte.

Das peroxidisch behandelte Propylenhomopolymerisat wurde beim Verlassen des Extruders granuliert und wies einen MFR von 54 g/10 min auf. Es wurde auf diese Weise für 2 Wochen Propylenhomopolymerisat peroxidisch abgebaut, ohne daß es zu einer Entzündung im Einzugstrichter gekommen ist.

## Patentansprüche

1. Verfahren zur peroxidischen Behandlung von Olefinpolymerisaten mit Di-tert.-butylperoxid in einem Extruder, bei denen man die Olefinpolymerisate gemeinsam mit Di-tert.-butylperoxid unter Inertgas einem Extruder zuführt, **dadurch gekennzeichnet, daß** man die Olefinpolymerisate in feinteiliger Form mit mittlere Teilchendurchmesser im Bereich von 100 bis 5000 µm und mit Temperaturen im Bereich von 55°C bis 110°C einsetzt.

2. Verfahren nach Anspruch 1, **dadurch gekennzeichnet, daß** man Olefinpolymerisate mit einer Oberfläche im Bereich von 0,2 bis 25 m²/g einsetzt.

3. verfahren nach Anspruch 1 oder 2, **dadurch gekennzeichnet, daß** man Di-tert.-butylperoxid und Olefinpolymerisate in einem Gewichtsverhältnis im Bereich von 1:100000 bis 1:500 dem Extruder zuführt.

4. Verfahren nach den Ansprüchen 1 bis 3, **dadurch gekennzeichnet, daß** man die peroxidische Behandlung der Olefinpolymerisate direkt im Anschluß an die Polymerisation durchführt.

5. Verfahren nach den Ansprüchen 1 bis 4, **dadurch gekennzeichnet, daß** man das Di-tert.-butylperoxid kontinuierlich in den Einzug des Extruder dosiert.

6. Verfahren nach den Ansprüchen 1 bis 5, **dadurch gekennzeichnet, daß** man als Olefinpolymerisate Propylenpolymerisate verwendet.

7. Verfahren nach Anspruch 6, **dadurch gekennzeichnet, daß** die Schmelze-Fließrate (MFR) der Propylenpolymerisate, gemessen nach ISO 1133 bei 230°C unter einem Gewicht von 2,16 kg, um mindestens 5 % erhöht wird.

8. Verfahren nach den Ansprüchen 1 bis 6, **dadurch gekennzeichnet, daß** dem Extruder zusätzlich ethylenisch ungesättigte Verbindungen zugegeben werden, die zumindest teilweise auf die Olefinpolymerisate gepfropft werden.

9. Verwendung der nach den Ansprüchen 1 bis 8 hergestellten, peroxidisch behandelten Olefinpolymerisate zur Herstellung von Formkörpern, Folien, Fasern oder Spinnvliesen.

10. Verfahren zur Herstellung von Formkörpern, Folien, Fasern oder Spinnvliesen, **dadurch gekennzeichnet, daß** man Olefinpolymerisate gemäß den Ansprüchen 1 bis 8 peroxidisch behandelt und anschließend zu Formkörpern, Folien, Fasern oder Spinnvliesen verarbeitet.

## Claims

1. A process for peroxidic treatment of olefin polymers with di-tert-butyl peroxide in an extruder, in which the olefin polymers together with di-tert-butyl peroxide under an inert gas are fed to an extruder, which comprises using the olefin polymers in a finely divided form having average paricle diameters of from 100 to 5000 µm and at from 55 to 110°C.

2. A process as claimed in claim 1, wherein olefin polymers are used which have a specific surface area of from 0.2 to 25 m²/g.

3. A process as claimed in claim 1 or 2, wherein di-tert-butyl peroxide and olefin polymers are fed to the extruder in a weight ratio of from 1:100000 to 1:500.

4. A process as claimed in any of claims 1 to 3, wherein the peroxidic treatment of the olefin polymers is carried out directly after the polymerization.

5. A process as claimed in any of claims 1 to 4, wherein the di-tert-butyl peroxide is metered continuously into the extruder feed area.

6. A process as claimed in any of claims 1 to 5, wherein the olefin polymers used comprise propylene polymers.

7. A process as claimed in claim 6, wherein the melt flow rate (MFR) of the propylene polymers, measured to ISO 1133 at 230°C under a load of 2.16 kg, is increased by at least 5%.

8. A process as claimed in any of claims 1 to 6, wherein the feed to the extruder also includes ethylenically unsaturated compounds, which are grafted, at least to some extent, onto the olefin polymers.

9. The use of the peroxidically treated olefin polymers prepared as claimed in any of claims 1 to 8 for producing moldings, films, fibers or nonwoven spunbond fabrics.

10. A process for producing moldings, films, fibers or nonwoven spunbond fabrics, which comprises peroxidically treating olefin polymers as claimed in any of claims 1 to 8 and then processing them to give moldings, films, fibers or nonwoven spunbond fabrics.

## Revendications

1. Procédé pour le traitement péroxydique de polymères oléfiniques par un di-tert.-butylpéroxyde, dans un appareil d'extrusion, procédé dans lequel on introduit simultanément le polymère oléfinique et le di-tert.-butylperoxyde, sous atmosphère de gaz inerte, dans un appareil d'extrusion, et qui est **caractérisé en ce que** le polymère oléfinique est amené, sous forme de particules de faibles dimensions, présentant un diamètre moyen compris entre 100 et 5000µm, à une température comprise entre 55°C et 110°C.

2. Procédé selon la revendication 1, **caractérisé en ce que** le polymère oléfinique présente une aire superficielle comprise entre 0,2 et 25 m²/g.

3. Procédé selon une des revendications 1 ou 2, **caractérisé en ce que** le di-tert.-butylpéroxyde et le polymère oléfinique sont introduits dans l'appareil d'extrusion selon un rapport pondéral compris entre 1/100000 et 1/500

4. Procédé selon une quelconque des revendications 1 à 3, **caractérisé en ce que** le traitement péroxydique du polymère oléfinique est directement mis en oeuvre après la polymérisation.

5. Procédé selon une quelconque des revendications 1 à 4, **caractérisé en ce que** le di-tert.-butylpéroxyde est dosé en continu dans la zone d'introduction de l'appareil d'extrusion

6. Procédé selon une quelconque des revendications 1 à 5, **caractérisé en ce que** en tant que polymère oléfinique est employé un polymère de propylène.

7. Procédé selon la revendication 6, **caractérisé en ce que** l'indice de fluidité du polymère oléfinique, mesuré selon la norme ISO 1133 à 230°C sous une charge de 2,16 kg, est augmenté d'au moins 5%.

8. Procédé selon une quelconque des revendications 1 à 6, **caractérisé en ce que**
l'on introduit en outre dans l'appareil d'extrusion des composés comportant une insaturation de type éthylénique, lequel, au moins en partie, est greffé sur le polymère oléfinique;

9. Utilisation des polymères oléfiniques à traitement péroxydique selon une quelconque des revendications 1 à 8 pour l'obtention de corps façonnés, feuilles, fibres ou tissus non tissés.

10. Procédé d'obtention de corps façonnés, feuilles, fibres ou tissus non tissés, **caractérisé en ce que** un polymère oléfinique selon les revendications 1 à 8, est soumis à un traitement péroxydique puis transformé en corps façonnés, feuilles, fibres ou tissus non tissés.
